# EUROPÄISCHE PATENTSCHRIFT

(11) **EP 2 787 088 B1**
(45) Veröffentlichungstag und Bekanntmachung des Hinweises auf die Patenterteilung: **16.12.2020**
(21) Anmeldenummer: 14171177.0
(22) Anmeldetag: 17.09.2012
(51) Int. Cl.: C21D 6/00, C21D 8/12, C21D 9/46, C22C 38/02, C22C 38/00, C22C 38/04, C22C 38/06, H01F 1/153, H02K 1/02

(54) **VERFAHREN ZUM HERSTELLUNG EINES NICHTKORNORIENTIERTEN HÖHERFESTEN ELEKTROBAND, ELEKTROBAND UND DESSEN VERWENDUNG**
METHOD FOR PRODUCING A HIGH STRENGTH NON-ORIENTED ELECTRICAL STRIP, ELECTRICAL STRIP AND ITS USE
PROCÉDÉ DE PRODUCTION D'ACIER MAGNÉTIQUE À GRAINS NON ORIENTÉS HAUTEMENT RÉSISTANTE, ACIER MAGNÉTIQUE ET SON UTILISATION

(30) Priorität: 16.09.2011 DE 102011053722
(43) Veröffentlichungstag der Anmeldung: 08.10.2014
(62) Teilanmeldung aus: 12759452.1
(73) Patentinhaber: Voestalpine Stahl GmbH, 4020 Linz (AT)
(72) Erfinder: Dorninger, Franz, 4223 Katsdorf (AT); Sonnleitner, Roman, 4540 Bad Hall (AT); Kreuzer, Herbert, 4030 Linz (AT)
(74) Vertreter: HGF

(56) Entgegenhaltungen:
- JP-A- 2001 049 402
- US-A1- 2009 202 383
- TANAKA I ET AL: "Magnetic and Mechanical Properties of Newly Developed High-Strength Nonoriented Electrical Steel", IEEE TRANSACTIONS ON MAGNETICS, IEEE SERVICE CENTER, NEW YORK, NY, US, Bd. 46, Nr. 2, 1. Februar 2010 (2010-02-01), Seiten 290-293, XP011287708, ISSN: 0018-9464, DOI: 10.1109/TMAG.2009.2033457

## Beschreibung

Die Erfindung betrifft ein Verfahren zum Herstellen eines höherfesten Elektrobandes sowie das mit dem Verfahren hergestellte Elektroband und dessen Verwendung.

Stator- und Rotorpakete von Elektromotoren und Generatoren sowie Lamellenpakete von Transformatoren werden aus sogenanntem Elektroband hergestellt. Bei Elektroband handelt es sich um ein Bandstahlblech, beispielsweise mit Dicken zwischen 0,1 mm und 2 mm.

Dieses Bandstahlblech wird in die benötigten Formen gestanzt und aus den einzelnen gestanzten Bestandteilen werden die entsprechenden Pakete zusammengefügt, welche anschließend zu fertigen Elektromotoren, Generatoren oder Transformatoren verarbeitet werden. Bei diesen Stanzverfahren werden üblicherweise, um den Verschnitt zu reduzieren, sowohl die Läufer- als auch die Statorteile aus demselben Blech gestanzt, haben also die entsprechend gleichen Eigenschaften. Wird in einer Spule ein derartiger Eisenkern (paketierte Bleche) eingesetzt, so wird durch dessen ferromagnetische Eigenschaften, die vom Stahlhersteller voreingestellt werden, oder zumindest soweit vorbereitet werden, dass sie durch ein abschließendes Glühen beim Anwender eingestellt werden, die Permeabilität und damit auch die magnetische Flussdichte in der Spule erhöht. Hierdurch kann die Anzahl der Windungen verringert werden, um eine benötigte Induktivität zu erreichen.

Weil das Eisen des Kerns ein elektrischer Leiter ist, fließt in einer von Wechselstrom durchflossenen Spule mit Eisenkern in diesem ein Strom in einer quasi kurz geschlossenen Windung, der Wirbelstrom genannt wird. Dieser Wirbelstrom wird geringer, wenn der Kern nicht aus einem Stück Eisen sondern aus einem Stapel der bereits beschriebenen Eisenbleche besteht. Derartige Elektrobänder bestehen aus einem relativ weichen Stahlmaterial. Insbesondere im Motoren- und Generatorenbau ist es für die Hersteller einerseits interessant die Luftspalte zu verringern, weil dies die magnetische Effektivität erhöht, andererseits treten insbesondere bei sehr schnell drehenden Motoren und insbesondere Generatoren sehr hohe Fliehkräfte auf. Insbesondere bei Generatoren können die Rotoren relativ groß sein, so dass bei den bewegten Massen sehr hohe Fliehkräfte auftreten können. Diese sehr hohen Fliehkräfte führen einerseits dazu, dass eine Streckung stattfindet, so dass sehr enge Luftspalte schwierig zu realisieren sind, andererseits können die hohen Fliehkräfte auch zu einem Versagen des Rotormaterials führen.

Um diesen Problemen zu begegnen ist es aus dem Stand der Technik bekannt, Elektroband mit höheren Festigkeitseigenschaften auszubilden.

Um die Festigkeitseigenschaften von Elektroband zu erhöhen wird üblicherweise mit Aluminium-Silizium-Legierungskonzepten gearbeitet. Solche Legierungskonzepte sind beispielsweise aus der JP 2010090474 A und aus der US 2009/202383 A1 bekannt, bei der ein relativ hoher Siliziumanteil eingesetzt wird. Einen allgemeineren Überblick liefert ein Skriptum "4th International Conference on Magnetism and Metallurgy", WMM '10, Freiberg, Germany, "Magnetic and Mechanical Properties of Newly Developed High-Strength Non-Oriented Electrical Steel", Seiten 277 bis 281.

Zudem sind aus der EP 2031 079 A1 ein hochfestes elektromagnetisches Stahlband und ein Verfahren zum Herstellen desselbigen bekannt. Aus dieser Schrift ist es bekannt, dass Kupfer den Rekristallisationsgrad steigert, wobei der Gehalt geringer als 0,1 Masse-%, insbesondere geringer als 0,01 Masse-% sein soll.

Aufgabe der Erfindung ist es ein Verfahren zum Herstellen eines höherfesten, nicht kornorientierten Elektrobandes zu schaffen, welches neben einer hohen Festigkeit gute magnetische Eigenschaften hat.

Die Aufgabe wird mit einem Verfahren mit den Merkmalen des Anspruchs 1 gelöst.

Vorteilhafte Weiterbildungen sind in Unteransprüchen gekennzeichnet.

Erfindungsgemäß wird ein teilrekristallisiertes Gefüge zur Einstellung von definierten Festigkeitswerten durch Ausnutzung von Seigerungsbereichen im Gefüge eingestellt.

Werden nachfolgend Gehalte angegeben, verstehen sich diese immer in Masse-%.

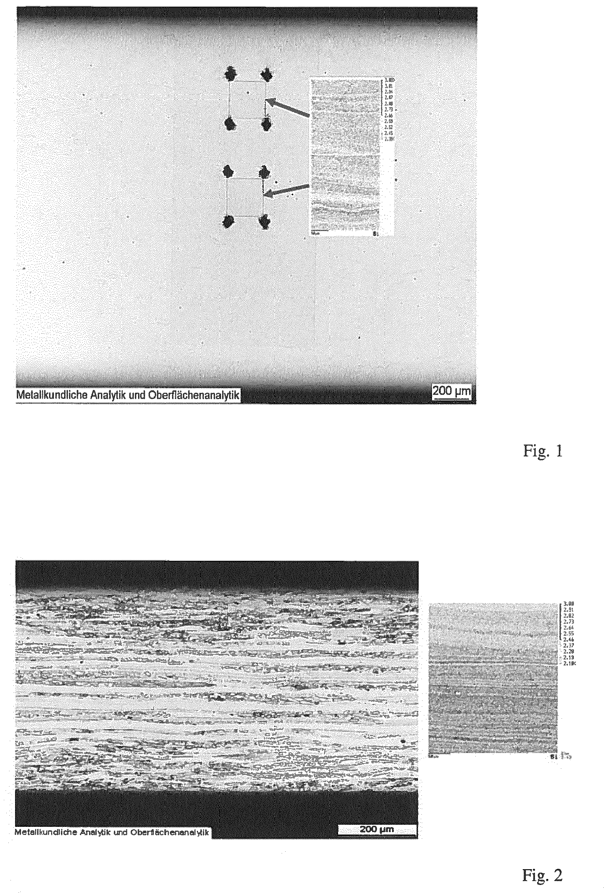

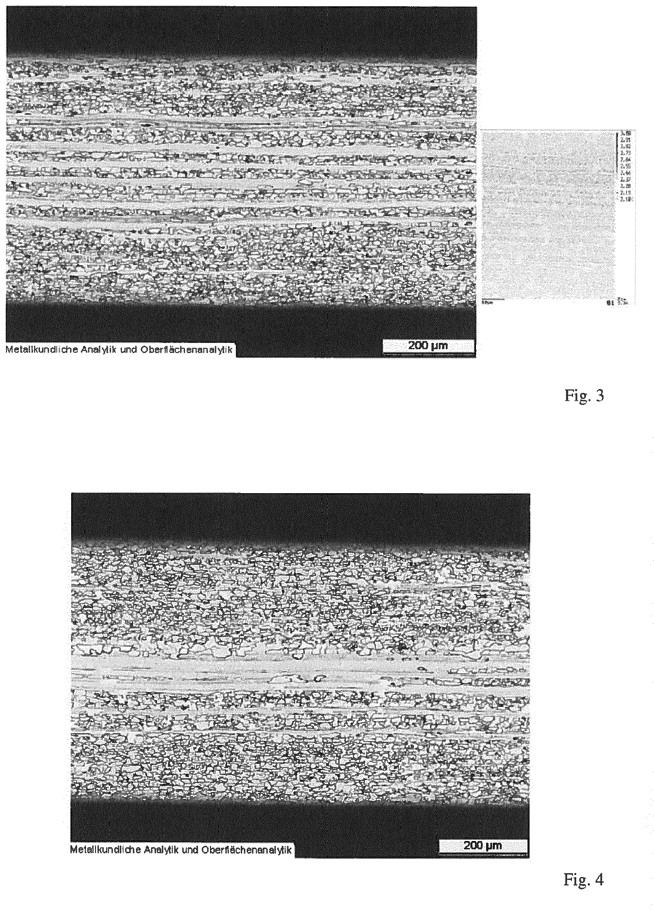

Bei der Produktion von hochlegiertem Elektroband mit Siliziumgehalten > 2 Masse-% treten beim Stranggießen Seigerungen von Silizium in der Bramme auf. Nach dem Erwärmen und anschließendem Warmwalzprozess sind im Warmbandquerschnitt längliche Bereiche mit erhöhten Siliziumgehalten feststellbar (Figur 1). Diese sind auch noch im kaltgewalzten Zustand erkennbar (Figuren 2 und 3). In diesen Bereichen wird durch den erhöhten Siliziumgehalt die Rekristallisation etwas verzögert, im Vergleich zu Bereichen mit niedrigerem Siliziumgehalt. Zusammen mit anderen Mechanismen, wie z. B. der Scherverformung in den oberflächennahen Bereichen und geringerer Warmbandkorngröße in den oberflächennahen Bereichen, führt bei einer entsprechenden Wahl eines Zeit-/Temperaturfensters bei der Schlussglühung zu einer Rekristallisation in erster Linie in oberflächennahen, siliziumärmeren Bereichen, wohingegen Seigerungsbereiche mit erhöhtem Siliziumgehalt sich erst in einem erholten und nicht rekristallisiserten Zustand befinden(Figuren 2 und 3) .

Insofern ergeben sich über die Dicke des Bandes unterschiedliche mechanische Eigenschaften, wobei je nach Rekristallisationsanteil bzw. Rekristallisationsgadient die mechanischen Eigenschaften des Gesamtgefüges beeinflusst werden.

Die genannten erholten Bereiche tragen zur hohen Festigkeit des Materials bei, die rekristallisierten Bereiche zu den guten magnetischen Eigenschaften, so dass hier ein Kompromiss zwischen den magnetischen Eigenschaften und den hohen Festigkeiten gefunden werden kann.
Zusätzlich wird durch Zugabe von mischkristallverfestigenden Elementen wie Si (notwendig für Seigerungsbereiche), Al, Mn und P festigkeitssteigernde Wirkung erzielt.

Die Erfindung wird anhand einer Zeichnung beispielhaft erläutert. Es zeigen hierbei:
- Figur 1:: Elementverteilungsanalysen mittels Mikrosonde über den Querschnitt einer Warmbandprobe;
- Figur 2:: Elementverteilungsanalysen mittels Mikrosonde über den Querschnitt einer kaltgewalzten und schlussgeglühten Probe im teilrekristallisierten Zustand- geringer Rekristallisationsgrad;
- Figur 3:: Elementverteilungsanalysen mittels Mikrosonde über den Querschnitt einer dritten Probe ebenfalls in kaltgewalzen und schlussgeglühtem, teilrekristallisierten Zustand- hoher Rekrisallisationsgrad;
- Figur 4:: Schliffbild Fertigmaterialquerschnitt (hoher Anteil an rekristallisiertem Gefüge),Kaltbanddicke 0,65 mm; Rekristallisationsgrad < 90%, geringe verfestigende Wirkung durch teilrekristallisiertes Gefüge ReH = 571 MPa
- Figur 5:: Schliffbild Fertigmaterialquerschnitt (mittlerer Anteil an rekristallisiertem Gefüge), Kaltbanddicke 0,65 mm; Rekristallisationsgrad < 75 %; mittlere verfestigende Wirkung durch teilrekristallisiertes Gefüge
- Figur 6:: Schliffbild Fertigmaterialquerschnitt (geringer Anteil an rekristallisiertem Gefüge), Kaltbanddicke 0,65 mm; Rekristallisationsgrad < 20%; hohe verfestigende Wirkung durch teilrekristallisiertes Gefüge.
- Figur 7:: ein Schliffbild Fertigmaterialquerschnitt (mittlerer Anteil an rekristallisiertem Gefüge), Kaltbanddicke 0,35 mm; ReH = 633 MPa
- Figur 8:: Schliffbild Fertigmaterialquerschnitt (geringer Anteil an rekristallisiertem Gefüge), Kaltbanddicke 0,5 mm; ReH = 742 MPa

In den Figuren 1 - 3 sind Elementverteilungsanalysen mittels Mikrosonde über den Querschnitt sowohl im Warmband als auch im kaltgewalzten und schlussgeglühten (teilrekristallisiert geglüht) Zustand dargestellt. Wie aus der Legende der Mikrosondenaufnahmen ersichtlich, handelt es sich bei den dunklen (blau bis rot) Bereichen um Si-reichere und bei den hellen (grün bis gelb) Bereichen um Si-ärmere Zonen im Gefüge. Sichtbar sind dabei in Figur 2 Bereiche mit erhöhtem Siliziumgehalt, in denen das Gefüge erholt und noch nicht rekristallisiert vorliegt. Elementverteilungsanalyse in Figur 3 zeigt eine relativ gleichmäßige Verteilung von Silizium im großteils rekristallisierten Gefüge.

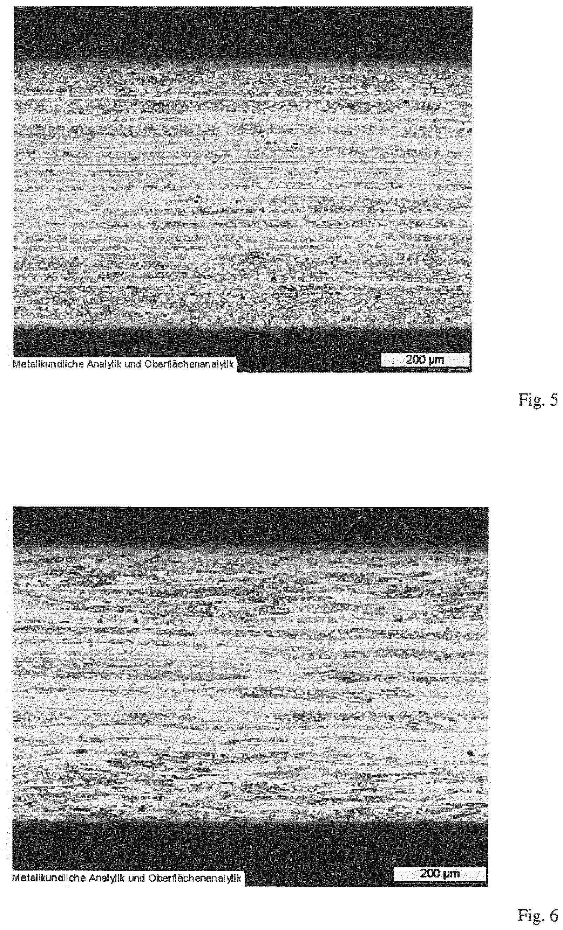

Figuren 4 bis 6 zeigen den Querschnitt im Querschliff von teilrekristallisiertem Fertigmaterial in Dicke 0,65 mm mit ähnlicher chemischer Zusammensetzung (vergleichbar mit jener von Beispiel 1)in unterschiedlichen Rekristallisationsstufen.

Erfindungsgemäß kann beim Schlussglühprozess des Elektrobandes, welches den Einfluss auf den Rekristallisationsgrad hat, bezüglich der Schlussglühtemperatur oder der Glühdauer variiert werden, so dass über die Glühtemperatur oder die Glühdauer oder beides der entsprechende Rekristallisationsgradient im Stahlband hergestellt wird. Hierbei wird erfindungsgemäß eine Einstellung so vorgenommen, dass der Rekristallisationsgrad zwischen 5 % und 95 % liegt, womit eine maximale obere Streckgrenze ReH von 450 MPa bis 850 MPa, insbesondere 500 MPa bis über 750 MPa möglich ist.

Es hat sich herausgestellt, dass sich der Prozess am stabilsten, reproduzierbarer und zuverlässiger im Bereich von 5 % bis 20 % und 70 % bis 95 % Rekristallisation fahren lässt. Hierfür wird die Schlussglühtemperatur zwischen 600°C und 800°C gewählt, vorzugsweise zwischen 650°C und 720°C gewählt, wobei die Glühdauer zwischen 60 s und 300 s, insbesondere zwischen 60 s und 240 s, insbesondere zwischen 120 s und 220 s liegt.

Das erfindungsgemäße Elektroband kann Anwendung finden in schnell drehenden Maschinen, bei denen der Rotor sehr hohen mechanischen Belastungen ausgesetzt ist, bei gleichzeitig nicht extrem hohen Anforderungen an die magnetischen Eigenschaften im Rotor. Im Gegensatz dazu werden in der Regel ausgezeichnete magnetische Eigenschaften für den Stator benötigt.

Um für beide Motorenkomponenten den jeweils optimalen Werkstoff einzusetzen, wären zwei Typen von Elektroband notwendig.

Bei der Erfindung ist von Vorteil, dass aus dem gleichen Grundmaterial sowohl Rotor als auch Stator gefertigt werden können. Dies ermöglicht eine optimale Schnittausnutzung des Bandes. Da die hohen Festigkeiten in erster Linie durch Rekristallisation von bestimmten Bereichen des Gefüges erreicht wird, können die Statorteile mit entsprechender Glühbehandlung nach dem Stanzen vollständig rekristallisieren und ausgezeichnete magnetische Eigenschaften erreichen. Der Vorteil gegenüber einer durch Ausscheidungshärtung erreichten Festigkeitssteigerung ist, dass die verfestigenden (erholtes Gefüge), aber magnetisch schlechteren Bereiche ausgeheilt werden können. Die dazu notwendige Glühbehandlung entspricht der in der Technik üblichen Glühung für semi-finished Elektroband.

Eine Schlussglühung des teilrekristalliserten Materials im Vergleich zur Glühung von (nach der Schlussglühung dressierten und verformten) "normalen" Semi- Finished Material hat den Vorteil, dass geringere Änderungen der gestanzten Geometrien zu erwarten ist.

Für die Produktion wird im Stahlwerk zunächst eine Vakuumbehandlung zur Entkohlung des Werkstoffes vorgenommen und anschließend in an sich bekannter Weise der Strangguss vorgenommen. Die entsprechend durch den Strangguss erzielten Brammen werden anschließend zu Warmband verarbeitet, wobei die Brammenziehtemperatur vorzugsweise zwischen 1.000°C und 1.200°C, insbesondere zwischen 1.000°C und 1.150°C liegt, die Walzendtemperatur zwischen 800°C und 950°C, insbesondere zwischen 830°C und 910°C und die Haspeltemperatur bei 500°C bis 800°C, insbesondere zwischen 650 °C und 750°C. Gegebenenfalls kann eine optionale Warmbandglühung zwischen dem Warm- und Kaltwalzen durchgeführt werden. Das so erzielte Warmband wird anschließend kalt weiterverarbeitet zu Kaltband, wobei der Umformgrad zwischen 60 % und 85 %, insbesondere zwischen 65 % und 85 % liegt, wobei in üblichem kontinuierlichen Kaltwalzprozess mit fünf Walzschritten gearbeitet wird. Die Dicke beträgt dann zwischen 0,1 mm und 1,5 mm, vorzugsweise 0,25 mm bis 1 mm.

Die Schlussglühparameter für die entsprechenden gestanzten Teile, die eine hohe Festigkeit durch Teilrekristallisation besitzen sollen, werden so eingestellt, dass die Glühtemperatur zwischen 600°C und 800°C, insbesondere zwischen 650°C und 720°C beträgt, wobei die Glühdauer auch abhängig von der Glühtemperatur zwischen 60 s und 300 s, insbesondere zwischen 60 s und 240 s, insbesondere zwischen 120 s und 220 s liegt.

Das Elektroband wird von der chemischen Analyse so eingestellt, dass die folgenden Bereiche erzielt werden:

| | |
|---|---|
| C | < 0,01 Masse-% |
| Si | 2 Masse-% - 3,5 Masse-% |
| Al | 0,1 Masse-% - 2 Masse-% |
| Mn | 0,1 Masse-% - 1 Masse-% |
| P | 0,01 Masse-% - 0,2 Masse-% |
| S | < 0,01 Masse-% |

Ni + Cr + Ti + Nb + V + Cu gemeinsam < 1 Masse-%, vorzugsweise < 0,3 %, vorzugsweise nur als nichtzulegierte Verunreinigung Die Erfindung wird anhand von Beispielen erläutert, wobei in den Beispielen die Abkürzungen wie folgt definiert sind:

| | |
|---|---|
| Reh | = obere Streckgrenze |
| Rm | = Zugfestigkeit |
| A80 | = Bruchdehnung |
| P15 | = Ummagnetisierungsverlust bei 50 Hz und 1,5 Tesla |
| J50 | = Polarisation bei einer Feldstärke von 5.000 A/m |

### Beispiel 1 (Figur 4):

ReH > 550 MPa
Rekristallisationsgrad < 90 %

Das Warmband wird wie oben beschrieben hergestellt, wobei die Haspeltemperatur 720°C beträgt. Das so erzielte Warmband wird anschließend einer Kaltverformung zu Kaltband unterzogen in einem kontinuierlichen Kaltwalzprozess, wobei der Kaltverformungsgrad 70 % beträgt. Die Kaltbanddicke beträgt 0,65 mm. Das so erzielte Band bzw. so aus diesem Band erzielte Stanzteile werden anschließend bei 680°C für 150 s geglüht. Die chemische Analyse des Bandes war hierbei:

| | |
|---|---|
| C | 0,0031 Masse-% |
| Si | 2,34 Masse-% |
| Al | 1,03 Masse-% |
| Mn | 0,27 Masse-% |
| P | 0,013 Masse-% |
| S | 0,006 Masse-% |

Die mechanischen Eigenschaften, die erzielt werden konnten, lagen hierbei wie folgt:

| | | |
|---|---|---|
| Mechanisch: | Reh (quer): | 571 MPa |
| | Rm (quer): | 623 MPa |
| | A80: | 18,8 % |
| | | |
| Magnetisch: | P15: | 6,7 W/kg |
| | J50: | 1,66T |

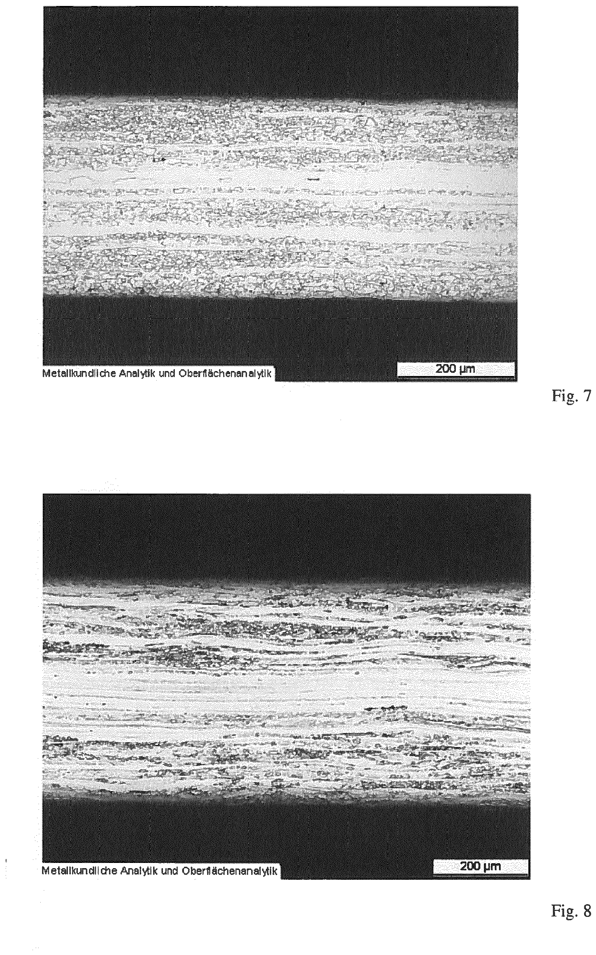

### Beispiel 2 (Figur 7):

ReH > 600 MPa
Rekristallisationsgrad < 75 %

Das Warmband wurde wie oben beschrieben hergestellt und bei 660°C gehaspelt, anschließend wurde das Warmband zu Kaltband in einem Kaltwalzprozess kontinuierlich gewalzt, wobei der Kaltverformungsgrad 83 % betrug und die Kaltbanddicke 0,35 mm. Die ausgestanzten Teile wurden bei einer Schlussglühtemperatur von 670°C für 150 s geglüht.

Die chemische Analyse dieses Bandes war:

| | |
|---|---|
| C | 0,0039 Masse-% |
| Si | 2, 3,11 Masse-% |
| Al | 0,92 Masse-% |
| Mn | 0,43 Masse-% |
| P | 0,014 Masse-% |
| S | 0,007Masse-% |

Mit dieser Vorgehensweise ließen sich die folgenden Eigenschaften erzielen:

| | | |
|---|---|---|
| Mechanisch: | Reh (quer): | 633 MPa |
| | Rm (quer): | 672 MPa |
| | A80: | 18,97% |
| | | |
| Magnetisch: | P15: | 6,7 W/kg |
| | J50: | 1,64 T |

### Beispiel 3 (Figur 8):

ReH > 650 MPa
Rekristallisationsgrad < 20 %

Das entsprechende Warmband wurde wie zuvor beschrieben hergestellt und bei 660°C gehaspelt. Das erzielte Warmband wurde anschließend kontinuierlich kaltgewalzt mit einem Kaltverformungsgrad von 77 % und einer erzielten Kaltbanddicke von 0, 5 mm. Bei einer Schlussglühtemperatur von 650°C betrug die Glühdauer 150 s.

Die chemische Analyse des Bandes war hierbei wie folgt:

| | |
|---|---|
| C | 0,0027 Masse-% |
| Si | 2,35 Masse-% |
| Al | 1,03 Masse-% |
| Mn | 0,53 Masse-% |
| P | 0,148 Masse-% |
| S | 0,004 Masse-% |

Mit dieser Vorgehensweise ließen sich die folgenden Eigenschaften erzielen:

| | | |
|---|---|---|
| Mechanisch: | Reh (quer): | 742 MPa |
| | Rm (quer): | 779 MPa |
| | A80: | 5,3 % |
| | | |
| Magnetisch: | P15: | 8.9 W/kg |
| | J50: | 1,59 T |

Bei den einzelnen Beispielen, insbesondere auch an den Figuren, kann man den Rekristallisationsgradienten erkennen, der über die Glühdauer erzielt wurde, jedoch auch bei verkürzter Glühdauer und höherer Temperatur erzielt werden kann, wobei sich hierbei auch der Gradient einstellen lässt.
Wie bei Beispielen 2 und 3 gezeigt wird, kann zusätzlich durch eine Variation der Legierungselemente, insbesondere eine Erhöhung von festigkeitssteigernden Elementen wie Silizium und Phosphor, welche als Mischkristallverfestiger wirken, bei ähnlichem Kristallisationsgrad eine zusätzliche Verfestigung des Werkstoffes erreicht werden.

## Patentansprüche

1. Verfahren zum Herstellen eines höherfesten nicht kornorientierten Elektrobandes, wobei aus einer Schmelze eine Bramme vergossen wird, die Bramme warmgewalzt und anschließend kaltgewalzt mit einem Umformgrad zwischen 60% und 85% wird und das Kaltband zur Erzielung eines teilrekristallisierten Gefüges mit einem Rekristallisationsgrad zwischen 5% und 95% zur Einstellung von Festigkeitswerten ReH im Bereich von 450 MPa bis 850 MPa bei einer Glühtemperatur von 600°C bis 800°C für 60 s bis 300 s geglüht wird, wobei Seigerungsbereiche im Gefüge eingestellt werden, wobei das Elektroband die nachfolgende chemische Analyse aufweist:
| | |
|---|---|
| C | < 0,01 Masse-% |
| Si | 2 Masse-% - 3,5 Masse-% |
| Al | 0,1 Masse-% - 2,0 Masse-%, insbesondere 0,1 Masse-% bis 1,5 Masse-% |
| Mn | 0,1 Masse-% - 1 Masse-% |
| P | 0,01 Masse-% - 0,2 Masse-% |
| S | < 0,01 Masse-% |
wobei durch den Siliziumgehalt > 2 % die Seigerungsbereiche in der Bramme ausgebildet werden, wobei durch die Seigerungen in den Bereichen mit hier erhöhtem Si-Gehalten die Rekristallisation im Vergleich mit den anderen Bereichen verzögert wird, **dadurch gekennzeichnet, dass** durch die Glühung des Kaltbandes bei 600° C - 800° C für 60 bis 300s eine Rekristallisation in oberflächennahen, siliziumärmeren Bereichen stattfindet, wohingegen Seigerungsbereiche mit erhöhtem Siliziumgehalt sich in einem erholten und nicht rekristallisierten Zustand befinden.

2. Verfahren nach einem der vorhergehenden Ansprüche, **dadurch gekennzeichnet, dass** der Rekristallisationsgrad zwischen 5 % und 20 % oder zwischen 70 % und 95% beträgt.

3. Verfahren nach einem der vorhergehenden Ansprüche, **dadurch gekennzeichnet, dass** das Elektroband auf eine Dicke von 0,1 mm bis 1,5 mm, insbesondere 0,25 mm bis 1 mm, insbesondere 0,25 mm bis 0,65 mm gewalzt ist.

4. Verfahren durch Anspruch 1, **dadurch gekennzeichnet, dass** eine Warmbandglühung zwischen den Warm- und Kaltwalzen durchgeführt wird.

5. Verfahren nach Anspruch 1, **dadurch gekennzeichnet, dass** Festigkeitswerte zwischen 450 MPa und 800 MPa eingestellt werden.

6. Verfahren nach Anspruch 1, **dadurch gekennzeichnet, dass** bei einer Glühtemperatur von 650° C bis 720° C geglüht wird.

7. Verfahren nach Anspruch 1, **dadurch gekennzeichnet, dass** 60s bis 240s geglüht wird.

8. Verfahren nach Anspruch 1, **dadurch gekennzeichnet, dass** zwischen 120s und 220s geglüht wird.

9. Verfahren nach Anspruch 1, **dadurch gekennzeichnet, dass** der Gehalt von Nickel plus Chrom plus Titan plus Niob plus Vanadium plus Kupfer gemeinsam < 0,3 Masse-% ist.

10. Verfahren nach Anspruch 1, **dadurch gekennzeichnet, dass** Nickel und Chrom und Titan und Niob und Vanadium und Kupfer gemeinsam nur als nichtzulegierte Verunreinigung vorhanden sind.

11. Elektroband, hergestellt in einem Verfahren gemäß den Ansprüchen 1 bis 10.

12. Verwendung eines Elektrobandes nach Anspruch 11 für Rotor- und Statorlamellenpakete von Elektromotoren oder - generatoren oder Lamellenpaketen von Transformatoren.

13. Verwendung eines Elektrobandes nach Anspruch 12 für Rotor- und Statorlamellenpakete, wobei bei der Verwendung für Rotoren keine oder nur eine geringe Schlussglühung durchgeführt wird, so dass das Elektroband nicht oder nur schwach rekristallisiert verwendet wird und für Statoren teilrekristallisiert verwendet wird.

## Claims

1. Method for producing a higher-strength, non-grain-oriented electrical strip, wherein a slab is cast from a molten mass, the slab is hot-rolled and then cold-rolled with a degree of deformation between 60 % and 85 % and the cold strip is annealed to achieve a partially recrystallized structure with a degree of recrystallization between 5 % and 95 % to set strength values ReH ranging from 450 MPa to 850 MPa at an annealing temperature of 600 °C to 800 °C for 60 s to 300 s, wherein segregation zones are formed in the structure, wherein the electrical strip has the following chemical analysis:
| | |
|---|---|
| C | <0.01 wt% |
| Si | 2 wt% - 3.5 wt% |
| Al | 0.1 wt% - 2.0 wt%, |
| more particularly | 0.1 wt% to 1.5 wt% |
| Mn | 0.1 wt% - 1 wt% |
| P | 0.01 wt% - 0.2 wt% |
| S | <0.01 wt% |
wherein the segregation zones are formed in the slab by the silicon content >2 %, wherein the recrystallization is delayed by the segregations in the zones with elevated Si content by comparison with the other zones, **characterized in that** recrystallization takes place in near-surface, low-silicon zones as a result of annealing of the cold-rolled strip at 600 °C - 800 °C for 60 s to 300 s, whereas segregation zones with elevated silicon content are found in a recovered and non-crystallized state.

2. Method in accordance with one of the preceding claims, **characterized in that** the degree of recrystallization is between 5 % and 20 % or between 70 % and 95 %.

3. Method in accordance with one of the preceding claims, **characterized in that** the electrical strip is rolled to a thickness of 0.1 mm to 1.5 mm, more particularly 0.25 mm to 1 mm, more particularly 0.25 mm to 0.65 mm.

4. Method in accordance with claim 1, **characterized in that** hot strip annealing is performed between hot rolling and cold rolling.

5. Method in accordance with claim 1, **characterized in that** strength values are set between 450 MPa and 800 MPa.

6. Method in accordance with claim 1, **characterized in that** annealing takes place at an annealing temperature of 650 °C to 720 °C.

7. Method in accordance with claim 1, **characterized in that** annealing takes place for 60 s to 240 s.

8. Method in accordance with claim 1, **characterized in that** annealing takes place between 120 s and 220 s.

9. Method in accordance with claim 1, **characterized in that** the content of nickel plus chromium plus titanium plus niobium plus vanadium plus copper together is <0.3 wt%.

10. Method in accordance with claim 1, **characterized in that** nickel and chromium and titanium and niobium and vanadium and copper together are present only as non-alloy impurities.

11. Electrical strip produced in a method in accordance with claims 1 to 10.

12. Use of an electrical strip in accordance with claim 11 for rotor and stator laminated cores of electric motors or generators or laminated cores of transformers.

13. Use of an electrical strip in accordance with claim 12 for rotor and stator laminated cores, wherein no or only minor final annealing is performed in the use for rotors so that the electrical strip is used in a non-recrystallized or only weakly recrystallized state and is used in a partially recrystallized state for stators.

## Revendications

1. Procédé pour fabriquer un feuillard magnétique à grains non orientés de grande résistance, dans lequel une brame est coulée à partir d'un matériau fondu, la brame est laminée à chaud et ensuite à froid avec un degré de déformation entre 60 % et 85 % et le feuillard froid est recuit pour obtenir une structure partiellement recristallisée avec un degré de recristallisation entre 5 % et 95 % pour régler les valeurs de résistance ReH dans une plage entre 450 MPa à 850 MPa à une température de recuit entre 600 °C à 800 °C pendant de 60 s à 300 s, où les zones de ségrégation sont réglées dans la structure, où le feuillard magnétique présente l'analyse chimique suivante :
| | |
|---|---|
| C | < 0,01 % en poids |
| Si | 2 % en poids - 3,5 % en poids |
| Al | 0,1 % en poids - 2,0 % en poids, |
| | en particulier de 0,1 % en poids à 1,5 % en poids |
| Mn | 0,1 % en poids - 1 % en poids |
| P | 0,01 % en poids - 0,2 % en poids |
| S | < 0,01 en poids |
où les zones de ségrégation sont formées dans la brame grâce à la teneur en silicium > 2 %, où la recristallisation est retardée dans les zones avec la teneur en silicium élevée par rapport aux autre zones, **caractérisé en ce que** la recuite du feuillard froid entraîne la recristallisation dans les zones pauvres en silicium proches de la surface à 600 °C - 800 °C pendant de 60 s à 300 s, alors que les zones de ségrégation avec une teneur en silicium élevée se trouvent dans un état reconstitué et non recristallisé.

2. Procédé selon l'une des revendications précédentes, **caractérisé en ce que** le degré de recristallisation est entre 5 % et 20 % ou entre 70 % et 95 %.

3. Procédé selon l'une des revendications précédentes, **caractérisé en ce que** le feuillard magnétique est laminé à une épaisseur de 0,1 mm à 1,5 mm, en particulier de 0,25 mm à 1 mm, en particulier de 0,25 mm à 0,65 mm.

4. Procédé selon la revendication 1, **caractérisé en ce qu'**un recuit du feuillard chaud est réalisée entre le laminage à chaud et le laminage à froid.

5. Procédé selon la revendication 1, **caractérisé en ce que** les valeurs de résistance sont

6. Procédé selon la revendication 1, **caractérisé en ce que** le recuit a lieu à une température de recuit entre 650 °C à 720 °C.

7. Procédé selon la revendication 1, **caractérisé en ce que** le recuit dure entre 60 s à 240 s.

8. Procédé selon la revendication 1, **caractérisé en ce que** le recuit dure entre 120 s et 220 s.

9. Procédé selon la revendication 1, **caractérisé en ce que** la teneur commune en nickel plus chrome plus titane plus niobium plus vanadium plus cuivre est de < 0,3 % en poids.

10. Procédé selon la revendication 1, **caractérisé en ce que** le nickel et le chrome et le titane et le niobium et le vanadium et le cuivre ensemble ne sont présents que comme une impureté non alliée.

11. Feuillard magnétique fabriqué dans un procédé selon les revendications de 1 à 10.

12. Utilisation d'un feuillard magnétique selon la revendication 11 pour les paquets de lamelles de rotor et de stator des moteurs ou générateurs électriques ou les paquets de lamelles des transformateurs.

13. Utilisation d'un feuillard magnétique selon la revendication 12 pour les paquets de lamelles de rotor et de stator, où aucun recuit final n'est réalisé ou un recuit final faible est réalisé lors de l'utilisation pour les rotors, de sorte que le feuillard magnétique soit utilisé non ou faiblement cristallisé, alors que pour les stators, il est utilisé partiellement recristallisé.
